# EUROPÄISCHE PATENTANMELDUNG

(11) **EP 1 720 236 A1**
(43) Veröffentlichungstag der Anmeldung: **08.11.2006**
(21) Anmeldenummer: 05009757.5
(22) Anmeldetag: 04.05.2005
(51) Int. Cl.: H02K 41/03, H02K 1/14

(54) **Geräuscharmer, modularer Direktantrieb**

(71) Anmelder: Michels, Klaus, P., Prof., Dr.-Ing., 85521 Ottobrunn (DE)
(72) Erfinder: Michels, Klaus, P., Prof., Dr.-Ing., 85521 Ottobrunn (DE)

(57) **Zusammenfassung**

Die Erfindung betrifft Ausführungen von elektrischen Direktantrieben nach dem Reluktanzprinzip, die bei gewichtssparender modularer Bauweise hohe Anforderungen bezüglich der Geräuscharmut und des maximal erzielbaren Drehmoments erfüllen können. Sie eignen sich insbesondere für elektrische Straßenfahrzeuge und andere - auch generatorische - Anwendungen, die z.B. aufgrund des Entfalls mechanischer Zwischengetriebe mit relativ niedrigen Drehzahlen und hohen Drehmomenten betrieben werden müssen.

## Beschreibung

Die Erfindung betrifft Direktantriebe, die sich durch ihre modulare, gewichtssparende Bauweise und die prinzipbedingte Geräuscharmut insbesondere für elektrisch angetriebene Straßenfahrzeuge und weitere Anwendungsfelder eignen, welche diese Eigenschaften erfordern.

Für elektrisch angetriebene Straßenfahrzeuge sind eine Vielzahl hybrider Antriebs-Konfigurationen in Verbindung mit Verbrennungsmotoren bekannt. Für rein elektrisch betriebene Fahrzeuge sind ebenfalls eine Vielzahl unterschiedlicher Konzepte einschließlich dem direkten Antrieb der Räder mittels Radnabenmotoren bekannt. In allen genannten Anwendungen werden i.a. Direktantriebe - ohne zusätzliche mechanische Getriebe für die elektrischen Maschinen - bevorzugt, um u.a. die Geräuschemissionen und den Wartungsaufwand zu minimieren. Auch die Geräuschemissionen bekannter elektrischer Maschinen werden jedoch aufgrund ihres charakteristischen Frequenzspektrums als äußerst störend empfunden.

Aus den genannten Gründen werden für diese Anwendungen elektrische Antriebe mit sehr geringer Geräuschemission und hohen verfügbaren Drehmomenten benötigt. Für Radnabenantriebe gelten diese Forderungen in besonderem Maße, weil sich die Geräusche des Antriebes an diesem Einbauort nur schwer abschirmen lassen. Letztere Problematik wird durch die strengen Gewichtsbeschränkungen für Radnabenmotoren verschärft, weil bekanntlich die unabgefederte Masse der Fahrzeugräder möglichst gering gehalten werden muss. Weitere Schwierigkeiten für Radnabenmotoren liegen in der Tatsache, dass der ohnehin geringe Einbauraum durch i.a. erforderliche, mechanische Bremseinrichtungen- wie Scheibenbremsen - eingeengt wird.

Entsprechend dem Stand der Technik können die genannten Anforderungen am ehesten mit permanent erregten Maschinen erfüllt werden. Geeignete, konstruktive Ausführungen dieser Maschinen - die auch hohe Drehmomente ermöglichen - sind insbesondere permanenterregte Transversalflussmaschinen. Optimierte Ausführungen dieser Maschinen sind aus
DE 196.34.949 ("Transversalfussmaschinen mit passivem Läufer und großem Luftspalt"),
DE 198.00.667 ("Transversalflussmaschine mit massearmem passivem Rotor"),
DE 195.22.382 ("Transversalflussmaschine zum Einsatz in einem Direktantrieb für Fahrzeuge") bekannt.

Nachteilig an den bekannten Ausführungen sind im wesentlichen:
- die komplizierte, vielteilige Konstruktion aus einer Vielzahl von mit pulsierenden Kräften belasteten Verbindungsteilen, die anfällig für unerwünschte Geräuschemissionen ist
- die relativ große, axiale Motorlänge, die insbesondere für Radnabenmotoren mit mechanischen Bremseinrichtungen ungünstig ist
- der erforderliche, hohe Materialeinsatz für die Permanentmagnete
- das kritische Verhalten des permanenterregten Antriebes bei Auftreten verschiedenartigster, elektrischer Defekte im Motor oder der zugehörigen Leistungselektronik.

Dieses kritische Verhalten beruht ursächlich auf der Tatsache, dass die permanenterregte Maschine nach Defekten im Antriebssystem nicht wunschgemäß entregt werden kann. Dadurch treten nach Defekten stationäre Kurzschlussströme oder hohe Klemmenspannungen und i.a. auch störende mechanische Bremsmomente auf. Abhilfe würde ein mechanisches Auskuppeln der Maschine schaffen - welches jedoch in den o.a. Anwendungen meist nicht realisierbar ist.

Antriebe nach dem Reluktanzprinzip sind frei von den beiden letztgenannten Nachteilen. Bekannte Konstruktionen erreichen jedoch bei weitem nicht die Leistungsfähigkeit permanenterregter Transversalflussmaschinen, wenn das Gewicht vergleichbar gehalten werden muss. Wesentliche Ursachen dieses Nachteiles liegen auch hier in den hohen Anforderungen an die mechanische Festigkeit der Konstruktion und deren Zusammenhang mit der Geräuschemission: In Reluktanzmaschinen treten prinzipbedingt besonders hohe, pulsierende Anziehungskräfte zwischen den weichmagnetischen Teilen von Rotor und Stator auf. Diese unerwünschten Kraftkomponenten erreichen betragsmäßig ein Vielfaches der nutzbaren Kraftkomponenten. Um die Auswirkungen der hohen pulsierenden Anzugskräfte zu beherrschen, muss in den bekannten Anordnungen ein großer Gewichtsanteil zur Erhöhung der mechanischen Festigkeit investiert werden. Eine bekannte und gebräuchliche konstruktive Ausführung eines Reluktanzmotors ist beispielsweise in DE.696.08 607 ("Geschaltete Reluktanzmaschine", Fig. 1) dargestellt. In dieser Anordnung führen die hohen, pulsierenden Anzugskräfte insbesondere zu einer Verformung des Stators, so dass die Jochbereiche des Stators mit großem Eisenquerschnitt und hohem Gewicht ausgeführt werden müssen.
Trotz dieser Maßnahme treten störende, mechanische Schwingungen durch die pulsierenden Anzugskräfte auf, welche ursächlich für die bekannten Geräuschprobleme der Reluktanzmaschinen sind.

Ein zweiter, wesentlicher Nachteil der bekannten Ausführungen von Reluktanzmaschinen sind die - verglichen mit permanenterregten Transversalflussmaschinen - erheblich kleineren, maximal erzielbaren spezifischen Drehmomente. Eine wesentliche Ursache dieses Mangels ist dadurch bedingt, dass keine vergleichbar kleinen Polteilungen realisierbar sind ohne dass das nutzbare Reluktanzmoment gegen Null geht.

Gemäß der Erfindung wird die Geräuschemission - und das hiermit eng verkoppelte Gewichtsproblem - dadurch minimiert, dass der Kraftflussweg für die pulsierenden Anzugskräfte auf kürzestem Wege geschlossen wird und vorteilhafte Symmetriebedingungen bestehen, um diese Kräfte in ihrer Wirkung auf Stator und Rotor möglichst zu kompensieren. Diese Bedingungen erfüllen die erfindungsgemäßen Anordnungen dadurch, dass der magnetische aktive Teil des Rotors und Stators entsprechend Anspruch 1 gestaltet wird.

Zum Zweiten ermöglicht diese erfindungsgemäße Ausgestaltung die sinnvolle Realisierung kleiner Polteilungen zwecks Erzielung hoher spezifischer Drehmomente, weil der aktive magnetische Kreis sehr kurz ist und in dem radial genuteten Hohlzylinder (2) eine als vorteilhaft bekannte Flusskonzentration erfolgt. Bei den erfindungsgemäßen Anordnungen hat die Wahl einer kleineren Polteilung auch keinen nachteiligen Einfluss auf den Aufwand für die Statorwicklungen (3), die Konstruktion oder das Gewicht. Einzig die Anzahl der U-Platten (1) und die Anzahl der Nuten in den Teilen (2) oder (21) steigt an. Die Dicke (d) der U-Platten (1) nimmt jedoch mit kleiner werdender Polteilung ab, so dass das Gesamtgewicht annähernd konstant bleibt.

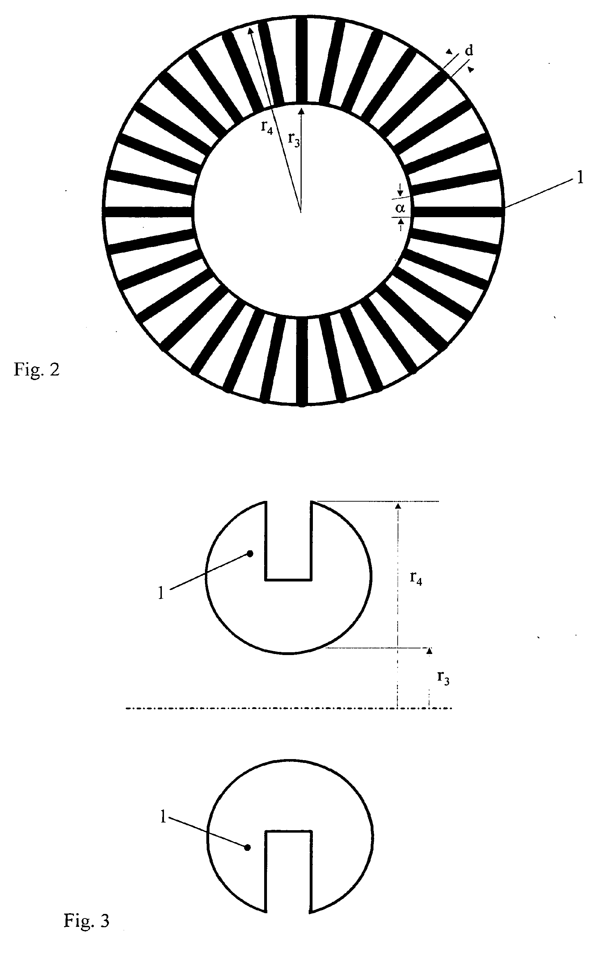

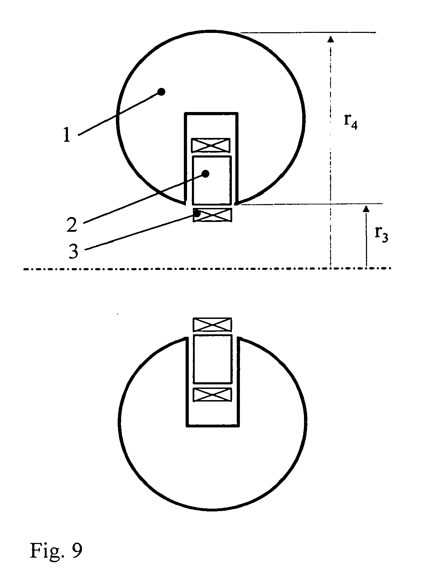

Folgende Bilder dienen zur weiteren Erläuterung der Erfindung.
Es stellen dar:

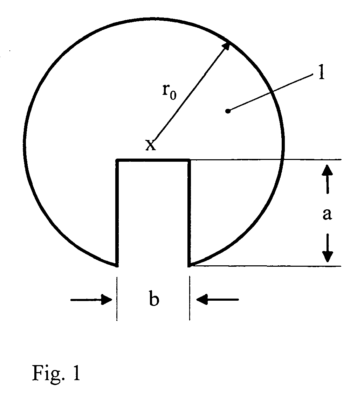

- **Fig. 1:**: U-förmige Platte, "U-Platte" (1), aus weichmagnetischem Material (vorzugsweise: metallische Legierung)
Bezeichnungen:
Einschnitttiefe: a
Einschnittbreite: b
Dicke: d
Radius: r₀
- **Fig. 2:**: Räumliche Anordnung der U-Platten (1) zu einem Ring (Ansicht auf Stirnseite)
Bezeichnungen:
Innenradius: r₃
Außenradius: r₄
Periodische Winkelteilung (Polteilung) : α (Die mechanische Halterung der U-Platten (1) ist in Fig. 2 nicht dargestellt).
- **Fig. 3:**: Räumliche Anordnung der U-Platten (1)-zwecks weiterer Erläuterung von Fig. 2 - im Längsschnitt dargestellt.
Dargestellt ist die erfindungsgemäße Ausführung nach Anspruch 3 mit radial nach außen ausgerichteten Einschnitten der U-Platten (1).

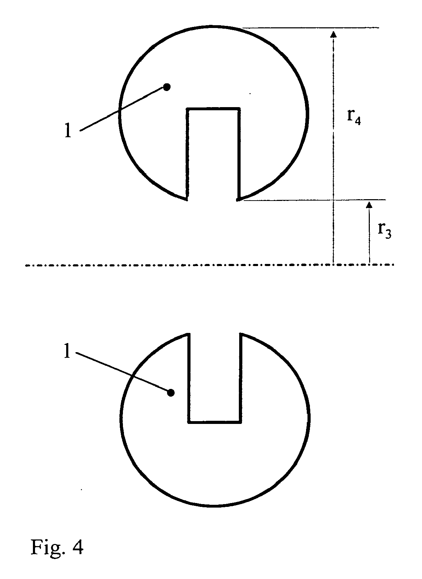

- **Fig. 4:**: Räumliche Anordnung der U-Platten (1) - zwecks weiterer Erläuterung von Fig. 2 - im Längsschnitt dargestellt.
Dargestellt ist die erfindungsgemäße Ausführung nach Anspruch 4 mit radial nach innen ausgerichteten Einschnitten der U-Platten (1).

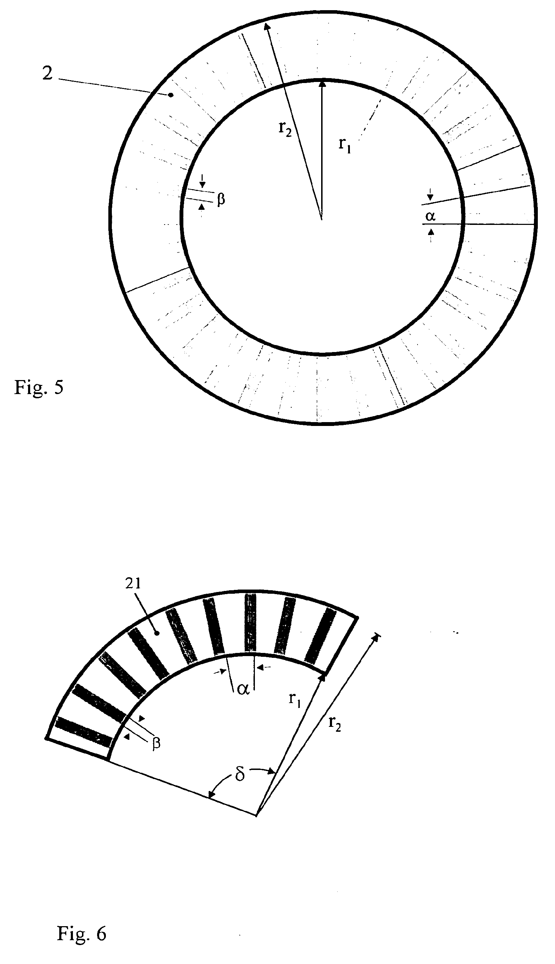

- **Fig. 5:**: "Hohlzylinder" (2) aus weichmagnetischem Material (vorzugsweise: Pulververbundwerkstoff) mit radialen Nuten an beiden Stirnseiten.
Bezeichnungen:
Innenradius des Hohlzylinders : r₁
Außenradius des Hohlzylinders: r₂
Länge des Hohlzylinders: l₁
- **Fig. 6:**: "Hohlzylinder-Sektor" (21) aus weichmagnetischem Material (vorzugsweise: Pulververbundwerkstoff) mit radialen Nuten an beiden Stirnseiten.
Bezeichnungen:
Innenradius des Hohlzylinder-Sektors: r₁
Außenradius des Hohlzylinder-Sektors: r₂
Länge des Hohlzylinder-Sektors: l₁
Winkel des Hohlzylinder-Sektor: δ
- **Fig. 7:**: Räumliche Anordnung (Ansicht auf Stirnseite) mehrerer Hohlzylinder-Sektoren (21) mit Anordnung der Statorwicklungen (3) entsprechend Fig. 9.

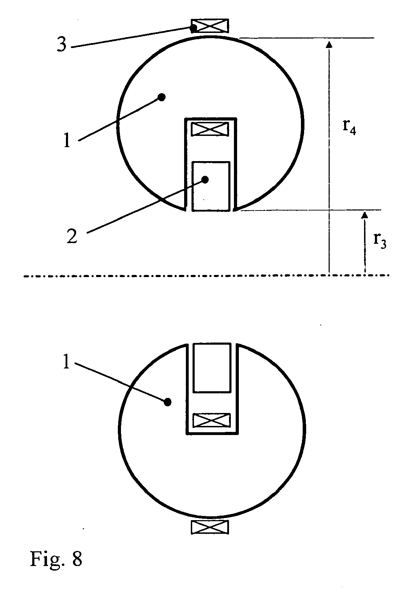

- **Fig. 8:**: Räumliche Anordnung (Ansicht im Längsschnitt) der U-Platten (1), Hohlzylinder (2) und Statorwicklungen (3).
Beispielhaft zu Patentanspruch 4.
- **Fig. 9:**: Räumliche Anordnung (Ansicht im Längsschnitt) der U-Platten (1), Hohlzylinder(2)und Statorwicklungen (3).
Beispielhaft zu Patentanspruch 6
- **Fig. 10:**: Räumliche Anordnung (Ansicht im Längsschnitt) der U-Platten (1), Hohlzylinder(2)und Statorwicklungen (3).
Beispielhaft zu Patentanspruch 4
- **Fig. 11:**: Räumliche Anordnung (Ansicht im Längsschnitt) der U-Platten (1), Hohlzylinder(2) und Statorwicklungen (3).
Beispielhaft zu Patentanspruch 3
- **Fig. 12:**: Zusammenfassung mehrerer U-Platten (1) zu einem gemeinsamen Bauteil "Kamm-Platte"(11) entsprechend Patentanspruch 7.
- **Fig. 13:**: Ausführungsbeispiel (unsere Prüfstands-Maschine) zu Patentanspruch 6 (Fig. 9), mit gut sichtbarem geteiltem und zur Aufnahme der U-Platten geschlitztem Kunststoff-Haltering (5a und 5b) sowie dem Fliehkraft-Bandage-Ring (4).

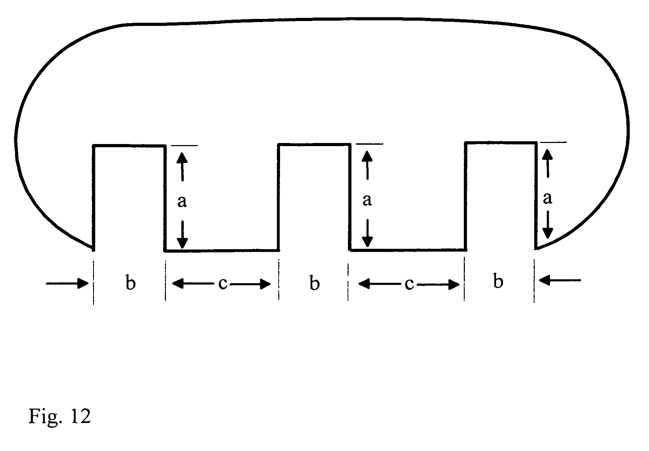

Wie grundsätzlich von Reluktanzmaschinen bekannt, kann ein weitgehend konstantes Drehmoment in allen Rotorstellungen nur dann erzielt werden, wenn die Maschine eine Mindestanzahl von 3 separaten Strängen, d.h.: 3 phasenverschoben elektrisch gespeisten, Statorwicklungen aufweist. Bei den erfindungsgemäßen Anordnungen kann diese Bedingung durch die axiale Reihenanordnung dreier Maschinen erfüllt werden. Diese Möglichkeit ist grundsätzlich bereits bekannt. Eine vorteilhafte Variante dieser Reihenanordnung besteht in diesem Fall darin, die U-Platten zu einer kammförmigen Platte zusammenzufassen(Fig.12).

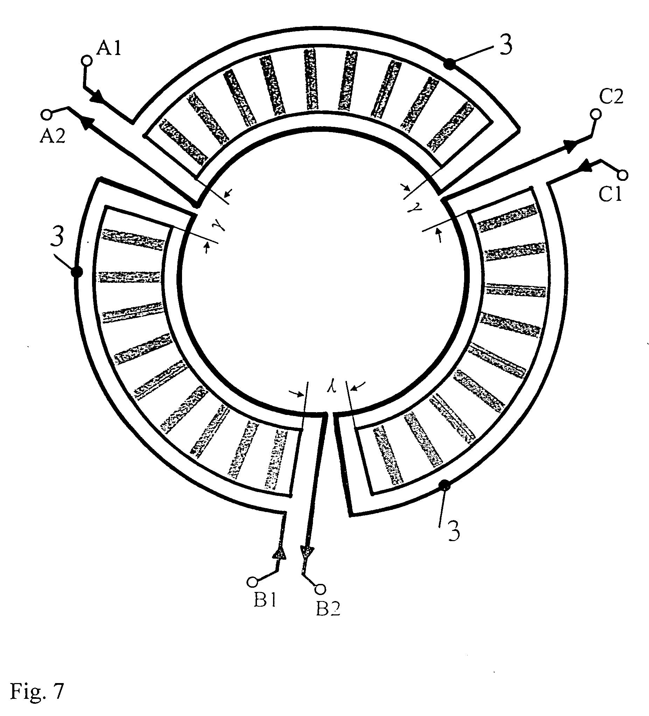

Um die mindestens drei Stränge zu realisieren und die axiale Baulänge nicht zu vergrößern, wird i.a. eine Anordnung entsprechend Fig.6 (siehe auch Fig.7) gewählt werden. Der

Hohlzylinder (2) ist hier aufgeteilt in mehrere Hohlzylinder-Sektoren (21). Zwischen diesen Hohlzylinder-Sektoren lässt sich bei Bedarf immer ein genügender Freiraum einhalten, der die Durchführung der 3 oder mehrerer Statorwicklungen entsprechend Anspruch 5 erlaubt. Falls die Statorwicklungen entsprechend Anspruch 6 ausgeführt werden sollen, lässt sich ein genügender Freiraum für die Durchführung der Statorwicklungen dadurch einhalten, dass am Umfang einige der U-Platten entfernt werden. Das ist bei den erfindungsgemäßen Anordnungen ohne nennenswerte Nachteile zulässig - lediglich das maximale Drehmoment nimmt linear mit der Anzahl der verbleibenden U-Bleche ab.

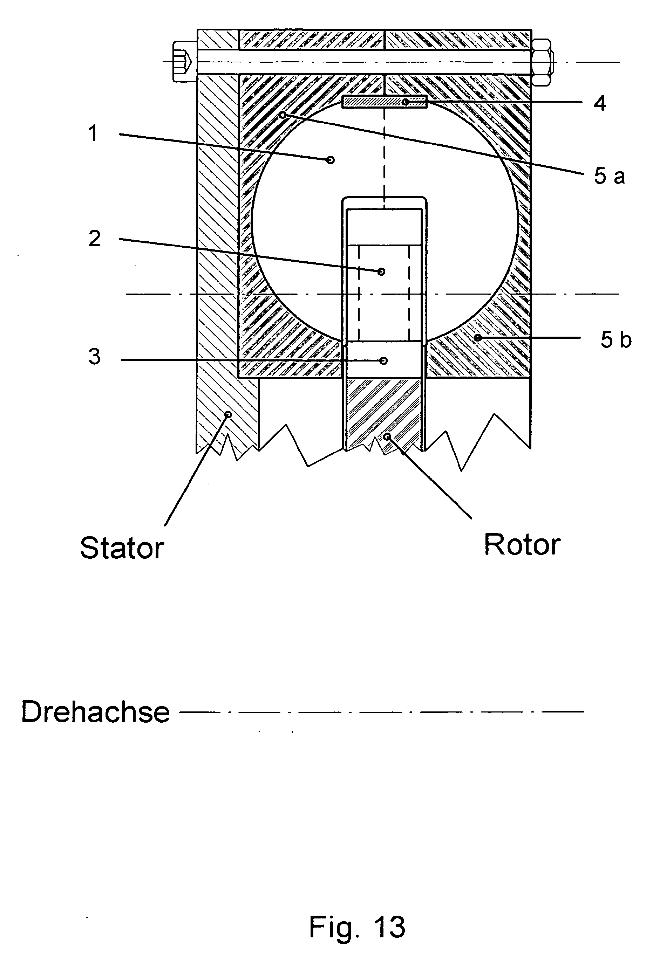

Äusserst vorteilhaft für eine exakte radiale wie axiale Ausrichtung der U-Platten wie auch zur Aufnahme der ggf. von ihnen erzeugten Fliehkräfte ist der erfindungsgemässe Bandagering (z.B. (4) in Fig. 13), der je nach Ausführung und Betriebsweise der Maschine die U-Platten, z.B. entweder in einer Nut an ihrem Umfang (Fig. 13) oder im Grund ihres Einschnitts angeordnet, zusammenhält. Ansonsten werden sie durch geeignetes amagnetisches Material, z.B. einen mittig geteilten Kunststoffring (ggf. mit Faser- Verstärkung o.ä.) mit entsprechenden radialen Schlitzen (5a und 5b in Fig. 13) in Position gehalten, der gleichzeitig die Ein- bzw. Ausleitung des Dreh- bzw. Abstützmomentes übernimmt. Dieser Ring kann auch ein- oder mehrteilig ggf. aus anderem geeigneten Material bestehen, das z.B. in die Hohlräume zwischen den U-Platten eingespritzt oder eingefüllt und ausgehärtet oder gesintert wird.

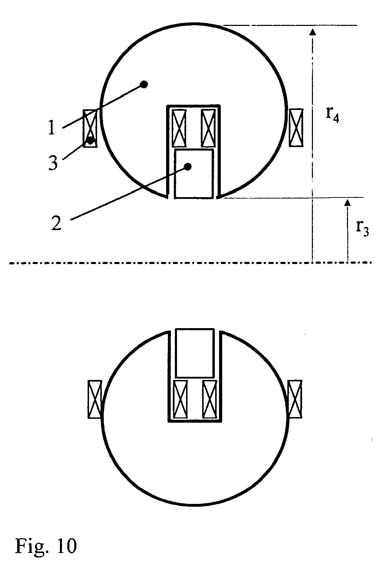

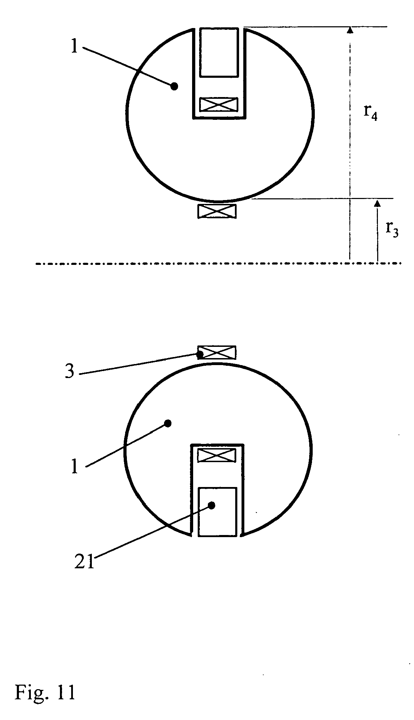

Die verschiedenen Varianten der erfindungsgemäßen Anordnungen der U-Platten und Wicklungen sind je nach den Einsatzbedingung (Innenläufer oder Außenläufer) mehr oder weniger vorteilhaft. Falls die Statorwicklungen vor der Endmontage gefertigt werden sollen, ist eine Anordnung und Aufteilung nach Fig. 10 günstig, welche ein nachträgliches Aufstecken der fertigen Wicklungen erlaubt. Eine vorteilhafte Zugänglichkeit (für die Montage) eines Innenläufers weist Fig.11 auf, da die Hohlzylinder-Sektoren des Stators von außen (auch nachträglich) gut montierbar sind.

Im übrigen kann es wegen der hohen Leistungskonzentration in dieser Maschine vorteilhaft sein, die Statorwicklungen als Hohlleiter auszuführen, sodass sie von einem Kühlmedium durchströmt werden können.

Je nach den Randbedingungen des Einbauortes kann es sinnvoll oder notwendig sein, die exakte Zuordnung von Stator und Rotor der Maschine durch ein oder mehrere zwischen beiden angeordnete Lager sicherzustellen. Vorteilhafterweise könnten das hydrodynamisch oder auch hydrostatisch wirkende Gleitlager oder Magnetlager sein.

## Patentansprüche

1. Geräuscharmer, modularer Direktantrieb nach dem Reluktanzprinzip, **dadurch gekennzeichnet, dass** der magnetisch aktive Teil des Rotors bzw. Stators aus einer beliebigen Anzahl radial ausgerichteter U-Platten (1) weichmagnetischen Materials besteht und der magnetisch aktive Teil des Stators bzw. Rotors von einem an beiden Stirnseiten, radial genuteten Hohlzylinder (2) weichmagnetischen Materials oder mehreren, sektorförmigen Teilen solcher Hohlzylinder, Hohlzylinder-Sektoren (21), gebildet wird (Fig. 1,2,3).

2. Erfindungsgemäßer Direktantrieb nach Anspruch 1, **dadurch gekennzeichnet, dass** die U-Platten (1) des Rotors bzw. Stators durch amagnetisches Material, z.B. Kunststoffteile mit radialen Schlitzen (5a und 5b in Fig. 13), mechanisch gehaltert werden.

3. Erfindungsgemäßer Direktantrieb nach Anspruch 1 bis 2, **dadurch gekennzeichnet, dass** die Halterung der U- Platten (1) des Rotors bzw. Stators aus amagnetischem Material besteht, das in die Hohlräume zwischen den U-Platten eingespritzt, eingefüllt und ausgehärtet oder gesintert wird.

4. Erfindungsgemäßer Direktantrieb nach Anspruch 1 bis 3, **dadurch gekennzeichnet, dass** die Einschnitte der U-Platten (1) radial nach außen gerichtet sind (Fig. 3).

5. Erfindungsgemäßer Direktantrieb nach Anspruch 1 bis 4, **dadurch gekennzeichnet, dass** die Einschnitte der U-Platten (1) radial nach innen gerichtet sind (Fig. 4).

6. Erfindungsgemäßer Direktantrieb nach Anspruch 1 bis 5, **dadurch gekennzeichnet, dass** die Statorwicklungen (3) in Umfangsrichtung um die Hohlzylinder (2) oder Hohlzylinder-Sektoren (21) geführt sind (Fig. 7,9,).

7. Erfindungsgemäßer Direktantrieb nach Anspruch 1 bis 6, **dadurch gekennzeichnet, dass** die Statorwicklungen (3) in Umfangsrichtung durch die Einschnitte der U-Platten (1) geführt sind (Fig.8, 10,11).

8. Erfindungsgemäßer Direktantrieb nach Anspruch 1 bis 7, **dadurch gekennzeichnet, dass** mehrere erfindungsgemäße Anordnungen axial hintereinander angeordnet und die U-Platten (1) zu kammförmigen Platten zusammengefasst sind (Fig. 12).

9. Erfindungsgemäßer Direktantrieb nach Anspruch 1 bis 8, **dadurch gekennzeichnet, dass** die U-Platten von einem Bandage-Ring (4) gehalten werden (Fig. 13), der in Nuten am Umfang oder im Einschnitt der U-Platten so angeordnet ist, dass er mögliche Fliehkräfte der U-Platten aufnehmen kann und/oder die U-Platten radial und/oder axial ausrichtet.

10. Erfindungsgemäßer Direktantrieb nach Anspruch 1 bis 9, **dadurch gekennzeichnet, dass** die Statorwicklungen (3) als Hohlleiter ausgeführt sind und von einem Kühlmedium durchströmt werden.

11. Erfindungsgemäßer Direktantrieb nach Anspruch 1 bis 10, **dadurch gekennzeichnet, dass** zwischen Stator und Rotor ein oder mehrere hydrodynamisch oder hydrostatisch wirkende Gleitlager oder Magnetlager angeordnet sind.

## Geänderte Patentansprüche

### Geänderte Patentansprüche gemäss Regel 86(2) EPÜ.

**1.** Geräuscharmer, modularer Direktantrieb nach dem Reluktanzprinzip mit einem als Rotor oder Stator genutzten, genuteten Hohlzylinder, **dadurch gekennzeichnet, dass**
- ein magnetisch aktiver Teil eines Rotors aus einer beliebigen Anzahl radial ausgerichteter U-Platten (1) weichmagnetischen Materials besteht und ein magnetisch aktiver Teil eines Stators von einem an beiden Stirnseiten radial genuteten Hohlzylinder (2) weichmagnetischen Materials gebildet wird, oder alternativ
- der magnetisch aktive Teil des Stators aus der beliebigen Anzahl radial ausgerichteter U-Platten (1) weichmagnetischen Materials besteht und der magnetisch aktive Teil des Rotors von dem an beiden Stirnseiten radial genuteten Hohlzylinder (2) weichmagnetischen Materials gebildet wird, wobei
- in beiden Alternativen der Hohlzylinder aus mehreren, sektorförmigen Teilen bzw. Hohlzylinder-Sektoren (21) gebildet sein kann.

**2.** Erfindungsgemäßer Direktantrieb nach Anspruch 1, **dadurch gekennzeichnet, dass** die U- Platten (1) des Rotors bzw. Stators durch amagnetisches Material, z.B. Kunststoffteile mit radialen Schlitzen (5a und 5b), mechanisch gehaltert werden.

**3.** Erfindungsgemäßer Direktantrieb nach Anspruch 1 bis 2, **dadurch gekennzeichnet, dass** die Halterung der U- Platten (1) des Rotors bzw. Stators aus amagnetischem Material besteht, das in die Hohlräume zwischen den U-Platten eingespritzt, eingefüllt und ausgehärtet oder gesintert wird.

**4.** Erfindungsgemäßer Direktantrieb nach Anspruch 1 bis 3, **dadurch gekennzeichnet, dass** die Einschnitte der U-Platten (1) radial nach außen gerichtet sind.

**5.** Erfindungsgemäßer Direktantrieb nach Anspruch 1 bis 4, **dadurch gekennzeichnet, dass** die Einschnitte der U-Platten (1) radial nach innen gerichtet sind.

**6.** Erfindungsgemäßer Direktantrieb nach Anspruch 1 bis 5, **dadurch gekennzeichnet, dass** die Statorwicklungen (3) in Umfangsrichtung um die Hohlzylinder (2) oder Hohlzylinder-Sektoren (21) geführt sind.

**7.** Erfindungsgemäßer Direktantrieb nach Anspruch 1 bis 6, **dadurch gekennzeichnet, dass** die Statorwicklungen (3) in Umfangsrichtung durch die Einschnitte der U-Platten (1) geführt sind.

**8.** Erfmdungsgemäßer Direktantrieb nach Anspruch 1 bis 7, **dadurch gekennzeichnet, dass** mehrere erfindungsgemäße Anordnungen axial hintereinander angeordnet und die U-Platten (1) zu kammförmigen Platten zusammengefasst sind.

**9.** Erfindungsgemäßer Direktantrieb nach Anspruch 1 bis 8, **dadurch gekennzeichnet, dass** die U-Platten von einem Bandage-Ring (4) gehalten werden, der in Nuten am Umfang oder im Einschnitt der U-Platten so angeordnet ist, dass er mögliche Fliehkräfte der U-Platten aufnehmen kann und/oder die U-Platten radial und/oder axial ausrichtet.

**10.** Erfindungsgemäßer Direktantrieb nach Anspruch 1 bis 9, **dadurch gekennzeichnet, dass** die Statorwicklungen (3) als Hohlleiter ausgeführt sind und von einem Kühlmedium durchströmt werden.

**11.** Erfindungsgemäßer Direktantrieb nach Anspruch 1 bis 10, **dadurch gekennzeichnet, dass** zwischen Stator und Rotor ein oder mehrere hydrodynamisch oder hydrostatisch wirkende Gleitlager oder Magnetlager angeordnet sind.
